# EUROPEAN PATENT APPLICATION

(11) **EP 4 613 533 A1**
(43) Date of publication of application: **10.09.2025**
(21) Application number: 25154667.7
(22) Date of filing: 29.01.2025
(51) Int. Cl.: B60K 35/22, B60K 35/28, B60K 35/81, B60W 30/18, B60W 50/14, G06V 20/56, G08G 1/16

(54) **IN-VEHICLE DISPLAY SYSTEM**

(30) Priority: 04.03.2024 JP 2024032310
(71) Applicant: TOYOTA JIDOSHA KABUSHIKI KAISHA, Aichi-ken, 471-8571 (JP)
(72) Inventor: ITO, Hironori, Tokyo, 103-0022 (JP)
(74) Representative: D Young & Co LLP

(57) **Abstract**

An in-vehicle display system includes a dividing line recognition unit configured to recognize dividing lines of an adjacent lane adjacent to a host vehicle lane, on which a host vehicle is traveling, on the basis of a detection result of a camera of the host vehicle and a display control unit configured to control display on a display on the basis of a recognition result of the dividing line recognition unit. The display control unit displays, on the display, an icon corresponding to a dividing line away from the host vehicle lane among the dividing lines of the adjacent lane when the host vehicle starts a lane change from the host vehicle lane to the adjacent lane and does not display the icon corresponding to the dividing line on the display when the host vehicle does not start the lane change.

## Description

### CROSS-REFERENCE TO RELATED APPLICATIONS

This application is based upon and claims the benefit of priority from Japanese Patent Application No. 2024-032310, filed on March 4, 2024, the entire contents of which are incorporated herein by reference.

### TECHNICAL FIELD

The present disclosure relates to an in-vehicle display system.

### BACKGROUND

In the related art, Japanese Unexamined Patent Publication No. 2020-163901 is known as a technical document related to an in-vehicle display system. Japanese Unexamined Patent Publication No. 2020-163901 discloses a technique that displays a dividing line of an adjacent lane detected by a camera mounted on a host vehicle on a display screen of the host vehicle when the adjacent lane is a lane to which a lane change can be made from a host vehicle lane.

### SUMMARY

In the above-described technique according to the related art, the dividing line of the adjacent lane may be intermittently blocked by a vehicle traveling on the adjacent lane. In this case, the dividing line of the adjacent lane is displayed intermittently on the display screen. As a result, there is a concern that a driver will feel annoyed.

An object of the present disclosure is to provide an in-vehicle display system that can reduce driver's annoyance.

According to an aspect of the present disclosure, there is provided an in-vehicle display system that is mounted on a host vehicle and displays a situation around the host vehicle on a display in a vehicle cabin. The in-vehicle display system includes: a dividing line recognition unit configured to recognize dividing lines of an adjacent lane adjacent to a host vehicle lane, on which the host vehicle is traveling, on the basis of a detection result of a camera of the host vehicle; and a display control unit configured to control display on the display on the basis of a recognition result of the dividing line recognition unit. The display control unit displays, on the display, an icon corresponding to an outer dividing line away from the host vehicle lane among the dividing lines of the adjacent lane when the host vehicle starts a lane change from the host vehicle lane to the adjacent lane and does not display the icon corresponding to the outer dividing line on the display when the host vehicle does not start the lane change.

According to the present disclosure, it is possible to provide an in-vehicle display system that can reduce the driver's annoyance.

### BRIEF DESCRIPTION OF THE DRAWINGS

Fig. 1 is a block diagram showing an in-vehicle display system according to an embodiment.
Fig. 2 is a perspective view showing an example of a situation around a host vehicle.
Fig. 3 is a view showing an example of a display screen of a display shown in Fig. 1.
Fig. 4 is a view showing an example of the display screen of the display shown in Fig. 1.
Fig. 5 is a flowchart showing a process performed by an ECU shown in Fig. 1.
Fig. 6 is a flowchart showing a process performed by the ECU shown in Fig. 1.

### DETAILED DESCRIPTION

Hereinafter, embodiments of the present disclosure will be described in detail with reference to the drawings.

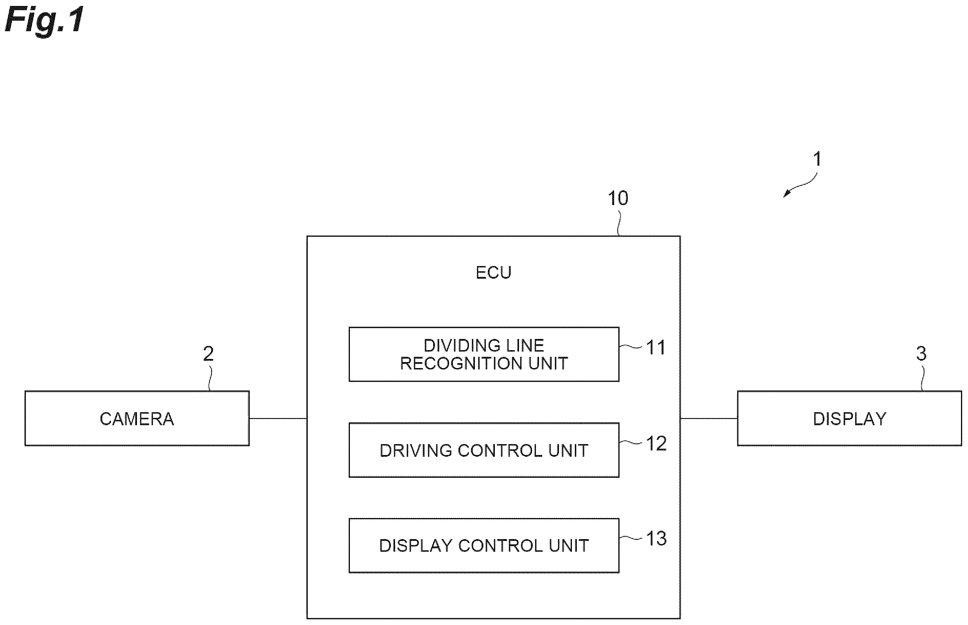

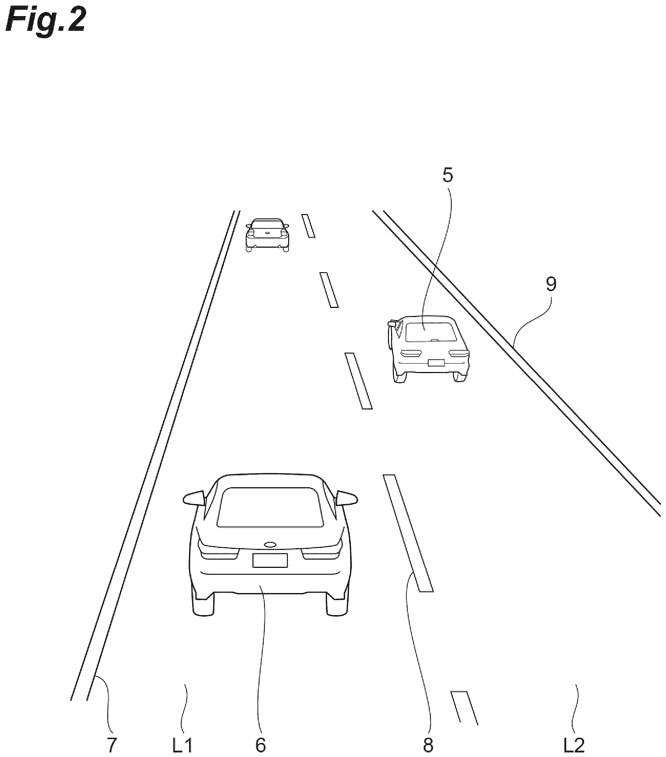

Fig. 1 is a block diagram showing an in-vehicle display system according to an embodiment. The in-vehicle display system 1 shown in Fig. 1 is used in, for example, an autonomous driving vehicle, a driving assistance vehicle, or the like. As shown in Fig. 1, the in-vehicle display system 1 includes a camera 2, a display 3, and an electronic control unit [ECU] 10. The in-vehicle display system 1 is mounted on a host vehicle 6 (see Fig. 2).

The camera 2 is an imaging device that captures an image of an external situation of the host vehicle 6. The camera 2 is mounted on the host vehicle 6. The camera 2 includes, for example, a front camera that captures an image in front of the host vehicle 6, a back camera that captures an image behind the host vehicle 6, and side cameras that capture images on the right and left sides of the host vehicle 6. Each camera may be a monocular camera or may be a stereo camera. The stereo camera has two imaging units that are disposed so as to reproduce binocular parallax. Imaging information of the stereo camera also includes information in a depth direction. The camera 2 transmits a captured image related to the external situation of the host vehicle 6 to the ECU 10.

The display 3 is mounted in a cabin of the host vehicle 6. The display 3 is, for example, a center display that is mounted on a dashboard of the host vehicle 6. The display 3 may be a display of a tablet computer that can be installed in the host vehicle 6 or may be a head-up display [HUD]. The in-vehicle display system 1 displays a situation around the host vehicle 6 on the display 3 in the vehicle cabin. The display 3 displays predetermined information on the basis of a control signal transmitted from the ECU 10.

The ECU 10 is an electronic control unit having a central processing unit (CPU) and a storage unit such as a read only memory (ROM) or a random access memory (RAM). In the ECU 10, for example, the CPU executes programs stored in the storage unit to implement various functions. The ECU 10 is provided in, for example, the host vehicle 6.

Fig. 2 is a perspective view showing an example of the situation around the host vehicle 6. As shown in Fig. 2, the host vehicle 6 is traveling on a host vehicle lane L1. Another vehicle 5 is traveling on an adjacent lane L2 adjacent to the host vehicle lane L1. In this embodiment, the host vehicle lane L1 is a left lane, and the adjacent lane L2 is a right lane. The host vehicle lane L1 and the adjacent lane L2 are separated by dividing lines 7, 8, and 9. In this embodiment, the dividing line 7 is a left dividing line of the host vehicle lane L1, the dividing line 8 is a right dividing line of the host vehicle lane L1 and a left dividing line of the adjacent lane L2, and the dividing line 9 is a right dividing line of the adjacent lane L2. Of the dividing lines 8 and 9 of the adjacent lane L2, the dividing line 9 is an outer dividing line away from the host vehicle lane L1.

The ECU 10 has a dividing line recognition unit 11, a driving control unit 12, and a display control unit 13 as functional configurations.

The dividing line recognition unit 11 recognizes the dividing lines 7, 8, and 9 on the basis of detection results (image data) of the camera 2 of the host vehicle 6. The dividing line recognition unit 11 recognizes the dividing lines 7, 8, and 9 using well-known image processing methods such as edge extraction, noise removal, pattern matching, and deep learning.

The driving control unit 12 controls the driving of the host vehicle 6. The driving control unit 12 executes driving assistance control, such as lane tracing assist [LTA] or lane departure alert [LDA], as lane departure prevention control for the host vehicle 6. That is, the host vehicle 6 can be assisted by the lane departure prevention control. LTA is control for steering the vehicle so as to avoid departure from the driving lane. LDA is control for issuing a warning so as to avoid departure from the driving lane. The driving control unit 12 executes driving assistance control, such as lane change assist [LCA], as lane change control for the host vehicle 6. That is, the host vehicle 6 can be assisted by the lane change control. LCA is control for performing steering required for a lane change.

The driving control unit 12 executes at least one of LTA and LDA on the basis of the dividing lines 7, 8, and 9 recognized by the dividing line recognition unit 11. For example, when the host vehicle 6 is traveling on the host vehicle lane L1, the driving control unit 12 executes at least one of LTA and LDA on the basis of the dividing lines 7 and 8 recognized by the dividing line recognition unit 11 such that the host vehicle 6 does not deviate from the host vehicle lane L1. For example, when the host vehicle 6 is traveling on the adjacent lane L2 after a lane change, the driving control unit 12 executes at least one of LTA and LDA on the basis of the dividing lines 8 and 9 recognized by the dividing line recognition unit 11 such that the host vehicle 6 does not depart from the adjacent lane L2. The driving control unit 12 executes LCA on the basis of the recognition results of the dividing lines 7, 8, and 9.

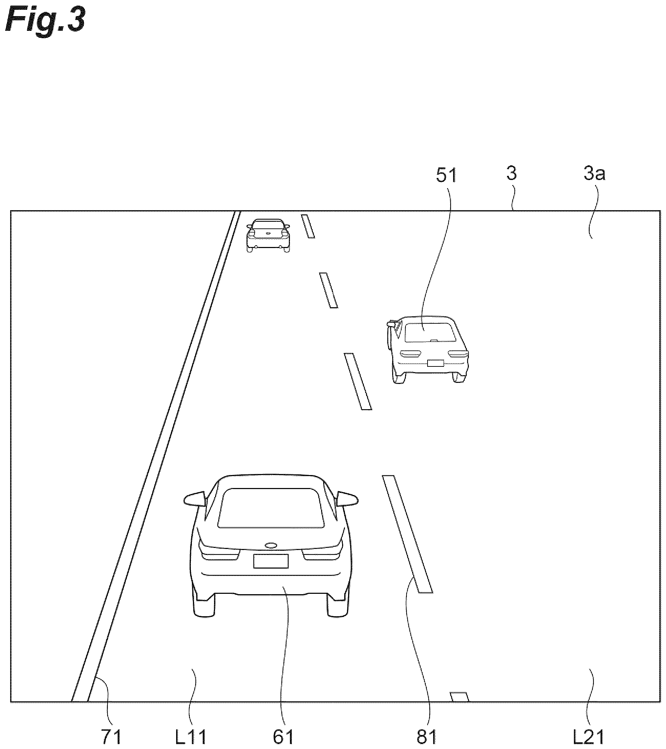

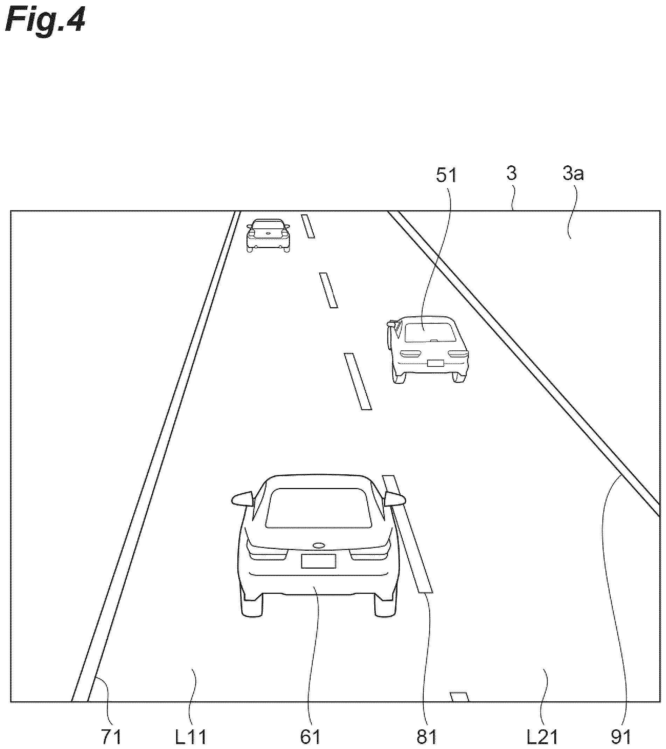

The display control unit 13 controls display on the display 3 on the basis of the recognition results of the dividing line recognition unit 11. Figs. 3 and 4 are views showing examples of a display screen of the display 3. As shown in Fig. 3, when the host vehicle 6 is traveling on the host vehicle lane L1, the display control unit 13 displays, on a display screen 3a of the display 3, a host vehicle icon 61 corresponding to the host vehicle 6, a host vehicle lane icon L11 corresponding to the host vehicle lane L1, a dividing line icon 71 corresponding to the dividing line 7, and a dividing line icon 81 corresponding to the dividing line 8. In addition, the display control unit 13 may display, on the display screen 3a, an another-vehicle icon 51 corresponding to another vehicle 5 and an adjacent lane icon L21 corresponding to the adjacent lane L2.

As shown in Fig. 4, when the host vehicle 6 starts a lane change from the host vehicle lane L1 to the adjacent lane L2 (hereinafter, simply referred to as a "lane change"), the display control unit 13 displays, on the display screen 3a, a dividing line icon 91 corresponding to the dividing line (outer dividing line) 9 in addition to the host vehicle icon 61, the host vehicle lane icon L11, and the dividing line icons 71 and 81. The display control unit 13 displays the dividing line icon 91 on the display screen 3a for at least a predetermined period of time during a period from a lane change start timing to a lane change end timing. For example, the display control unit 13 displays the dividing line icon 91 on the display screen 3a during a period for which the lane change control is being executed. In addition, when the host vehicle 6 ends the lane change, the display control unit 13 does not display, on the display screen 3a, the dividing line icon 71 corresponding to the dividing line 7, which is away from the adjacent lane L2, of the dividing lines 7 and 8 and the host vehicle lane icon L11.

As shown in Fig. 3, when the host vehicle 6 does not start a lane change and is traveling on the host vehicle lane L1, the display control unit 13 displays the host vehicle icon 61, the host vehicle lane icon L11, and the dividing line icons 71 and 81 on the display screen 3a and does not display the dividing line icon 91 on the display screen 3a.

The display control unit 13 controls the display timing of the dividing line icon 91. When the lane departure prevention control is being executed, the display control unit 13 displays the dividing line icon 91 from a first display timing. When the lane departure prevention control is not being executed, the display control unit 13 displays the dividing line icon 91 from a second display timing. The first display timing and the second display timing are different from each other. In this embodiment, the first display timing is earlier than the second display timing. That is, when the lane departure prevention control is being executed, the display control unit 13 displays the dividing line icon 91 earlier than when the lane departure prevention control is not being executed. In this embodiment, the first display timing is, for example, the lane change start timing. That is, in this embodiment, the display control unit 13 displays the dividing line icon 91 at the same time as the host vehicle 6 starts a lane change.

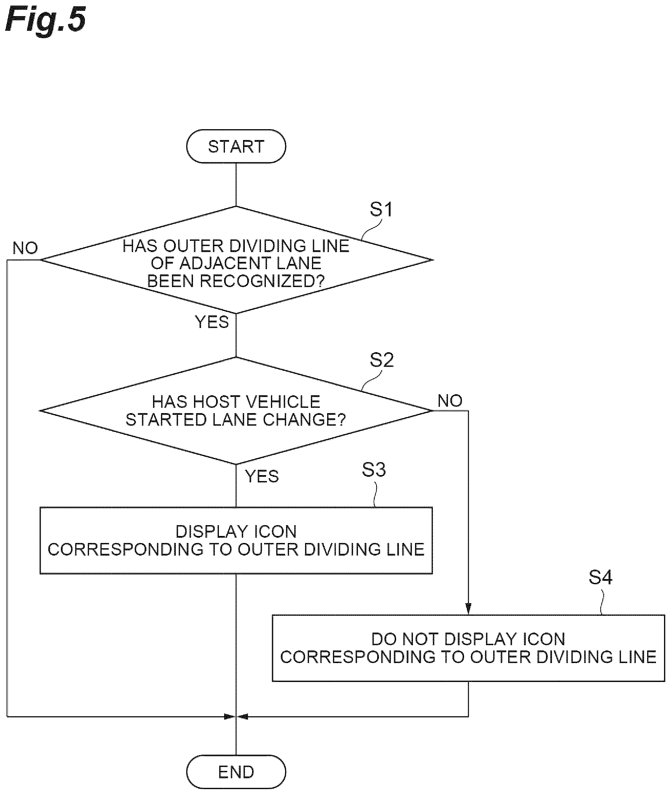

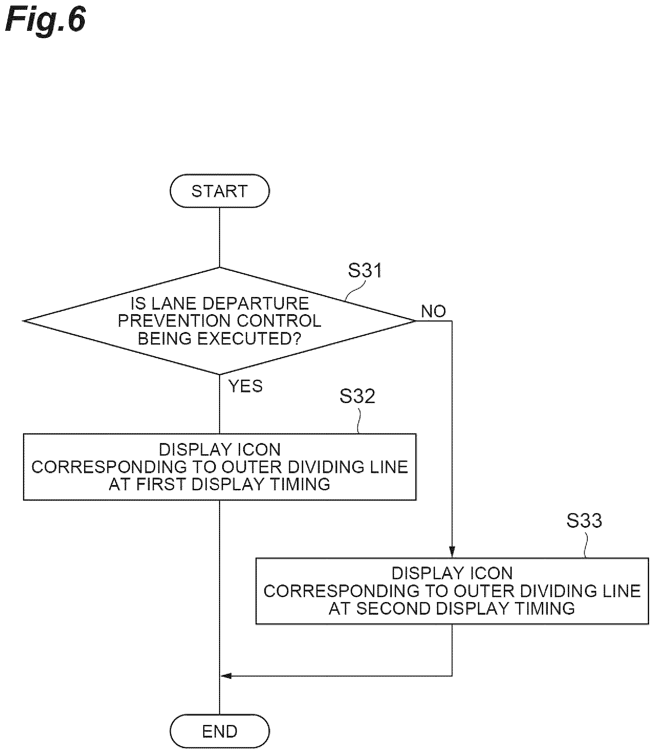

Next, an example of a process performed by the ECU 10 will be described. Figs. 5 and 6 are flowcharts showing the process performed by the ECU 10. As shown in Fig. 5, in Step S1, the ECU 10 determines whether or not the dividing line (outer dividing line) 9 of the adj acent lane L2 has been recognized. When determining that the dividing line 9 has been recognized (Step S1: YES), the ECU 10 proceeds to Step S2. When determining that the dividing line 9 has not been recognized (Step S1: NO), the ECU 10 ends this process.

In Step S2, the ECU 10 determines whether or not the host vehicle 6 has started to a lane change. When determining that the host vehicle 6 has started the lane change (Step S2: YES), the ECU 10 proceeds to Step S3. When determining that the host vehicle 6 has not started the lane change (Step S2: NO), the ECU 10 proceeds to Step S4. In Step S3, the ECU 10 displays the dividing line icon 91 corresponding to the dividing line 9 on the display screen 3a of the display 3. In Step S4, the ECU 10 does not display the dividing line icon 91 corresponding to the dividing line 9 on the display screen 3a of the display 3.

Fig. 6 is a flowchart showing details of Step S3 shown in Fig. 5. As shown in Fig. 6, in Step S31, the ECU 10 determines whether or not the lane departure prevention control is being executed. When determining that the lane departure prevention control is being executed (Step S31: YES), the ECU 10 proceeds to Step S32. When determining that the lane departure prevention control is not being executed (Step S31: NO), the ECU 10 proceeds to Step S33. In Step S32, the ECU 10 displays the dividing line icon 91 corresponding to the dividing line 9 on the display screen 3a of the display 3 at the first display timing. In Step S33, the ECU 10 displays the dividing line icon 91 corresponding to the dividing line 9 on the display screen 3a of the display 3 at the second display timing.

As described above, in the in-vehicle display system 1, when the host vehicle 6 has started a lane change, the dividing line icon 91 corresponding to the dividing line 9 of the adjacent lane L2 is displayed. Therefore, the driver's anxiety associated with the lane change is reduced. In particular, when the lane departure prevention control is being executed, when the dividing line icon 91 is appropriately displayed, the driver's anxiety is further reduced. On the other hand, when the host vehicle 6 has not started the lane change, the dividing line icon 91 corresponding to the dividing line 9 of the adjacent lane L2 is not displayed. Therefore, even when the dividing line 9 is intermittently blocked by another vehicle 5 traveling on the adjacent lane L2, the driver's annoyance caused by the intermittent display of the dividing line icon 91 is reduced. As a result, according to the in-vehicle display system 1, the driver's annoyance is reduced.

The first display timing of the dividing line icon 91 when the lane departure prevention control is being executed is different from the second display timing of the dividing line icon 91 when the lane departure prevention control is not being executed. The driver's anxiety when the lane departure prevention control is being executed is different from the driver's anxiety when the lane departure prevention control is not being executed. Since the first display timing and the second display timing are different from each other, the driver's anxiety is appropriately alleviated.

The first display timing is earlier than the second display timing. Therefore, when the lane departure prevention control is being executed, the dividing line icon 91 is displayed earlier than when the lane departure prevention control is not being executed. As a result, the driver's anxiety is appropriately alleviated.

The first display timing is the lane change start timing. Therefore, the driver's anxiety is further appropriately alleviated.

The embodiment of the present disclosure has been described above. However, the present disclosure is not limited to the above-described embodiment. The present disclosure can be implemented in various forms including the above-described embodiment and various modifications and improvements based on the knowledge of those skilled in the art.

In the above-described embodiment, the example has been described in which the host vehicle lane L1 is the left lane and the adjacent lane L2 is the right lane. However, the host vehicle lane L1 may be the right lane, and the adjacent lane L2 may be the left lane. In addition, even when the dividing line of the adjacent lane L2 is blocked by another vehicle and is not capable of being detected by the camera, the position of the dividing line may be predicted using past driving data, map information, and lane shape pattern recognition, and the dividing line icon may be displayed on the display on the basis of the prediction result. This makes it possible to prevent the dividing line icon from being displayed intermittently and to further reduce the driver's annoyance.

In the embodiment, the example has been described in which the driving of the host vehicle 6 is supported by the lane departure prevention control. However, the host vehicle 6 may not be supported by the lane departure prevention control. Further, the vehicle may be provided with a vehicle-to-vehicle communication function of communicating with surrounding vehicles and may acquire information of the dividing line of the adjacent lane from other vehicles. The detection results from the camera and information from other vehicles can be combined to perform more accurate dividing line recognition. This makes it possible to display the dividing line that is not capable of being detected by the camera and to alleviate the driver's anxiety.

In the embodiment, the example has been described in which the first display timing is earlier than the second display timing. However, the first display timing may be later than the second display timing. The first display timing may be the same as the second display timing. In addition, at least one of a driver monitoring camera and sensor that detects the line of sight of the driver may be installed inside the vehicle cabin, and the display of the dividing line icon for the adjacent lane L2 may be suppressed when the driver is not gazing at the display or when it is determined that there is little need to display the dividing line icon on the basis of the line of sight of the driver. This makes it possible to reduce the driver's annoyance caused by the display of unnecessary information and to accurately provide only the necessary information.

In the embodiment, the example has been described in which the first display timing is the lane change start timing. However, the first display timing may be any timing between the lane change start timing and the lane change end timing.

### REFERENCE SIGNS LIST

1: in-vehicle display system, 2: camera, 3: display, 6: host vehicle, 7, 8, 9: dividing line, 11: dividing line recognition unit, 13: display control unit, 71, 81, 91: dividing line icon, L1: host vehicle lane, L2: adjacent lane.

## Claims

1. An in-vehicle display system (1) that is mounted on a host vehicle (6) and displays a situation around the host vehicle (6) on a display (3) in a vehicle cabin, the in-vehicle display system (1) comprising:
a dividing line recognition unit (11) configured to recognize dividing lines (7-9) of an adjacent lane (L2) adjacent to a host vehicle lane (L1), on which the host vehicle (6) is traveling, on the basis of a detection result of a camera (2) of the host vehicle (6); and
a display control unit (13) configured to control display on the display (3) on the basis of a recognition result of the dividing line recognition unit (11),
wherein the display control unit (13) displays, on the display (3), an icon (91) corresponding to an outer dividing line (9) away from the host vehicle lane (L1) among the dividing lines (5) of the adjacent lane (L2) when the host vehicle (6) starts a lane change from the host vehicle lane (L1) to the adjacent lane (L2) and does not display the icon (91) corresponding to the outer dividing line (9) on the display (3) when the host vehicle (6) does not start the lane change.

2. The in-vehicle display system (1) according to claim 1,
wherein driving of the host vehicle (6) can be assisted by lane departure prevention control, and
a first display timing of the icon (9) when the lane departure prevention control is being executed is different from a second display timing of the icon (9) when the lane departure prevention control is not being executed.

3. The in-vehicle display system (1) according to claim 2,
wherein the first display timing is earlier than the second display timing.

4. The in-vehicle display system (1) according to claim 3,
wherein the first display timing is a start timing of the lane change.
